Europäisches Patentamt

European Patent Office

Office européen des brevets

(19)

(11) Publication number: **0 222 388 B1**

(12) **EUROPEAN PATENT SPECIFICATION**

(45) Date of publication of patent specification: **09.10.91**

(51) Int. Cl.⁵: **H04N 1/04**

(21) Application number: **86115710.5**

(22) Date of filing: **12.11.86**

(54) Laser scanning apparatus.

(30) Priority: **15.11.85 US 798539**

(43) Date of publication of application:
**20.05.87 Bulletin 87/21**

(45) Publication of the grant of the patent:
**09.10.91 Bulletin 91/41**

(84) Designated Contracting States:
**BE CH DE FR GB IT LI NL SE**

(56) References cited:
**US-A- 3 370 504**
**US-A- 4 206 482**

(73) Proprietor: **E.I. DU PONT DE NEMOURS AND COMPANY**
**1007 Market Street**
**Wilmington Delaware 19898(US)**

(72) Inventor: **Lee, Jerald Dana**
**Box 4, Burrows Run Road**
**Mendenhall Pennsylvania 19357(US)**
Inventor: **Elias, John Greer**
**179 Brandywine Boulevard Edgewood Hills**
**Wilmington Delaware 19809(US)**
Inventor: **Rockney, Bennett Hanson**
**1497 Washington Lane Highwoods**
**West Chester Pennsylvania 19382(US)**

(74) Representative: **von Kreisler, Alek,**
**Dipl.-Chem. et al**
**Deichmannhaus am Hauptbahnhof**
**W-5000 Köln 1(DE)**

Rank Xerox (UK) Business Services

## Description

### FIELD OF THE INVENTION

The present invention relates to a laser scanning apparatus for scanning a radiograph, and in particular to a laser scanning apparatus in which the radiograph is supported on a curved field and which includes a curvilinear photodetector.

### DESCRIPTION OF THE PRIOR ART

Laser scanning apparatus for scanning a radiograph and digitizing the same for electronic analysis and transmission are known. Exemplary of such apparatus is that manufactured by E. I. du Pont de Nemours and Company, Inc. as the Film Digital Radiography System.

Such apparatus uses a galvanometer based oscillating mirror to direct a beam of interrogating radiation across the surface of a radiograph. The radiograph is supported on a planar surface, or platen. Mounted above the platen in a position to receive the radiation transmitted through the radiograph is a linear semiconductor photodetector. The photodetector is fabricated from a plurality of PIN semiconductor diode strips placed edge-to-edge in a planar orientation. An optical diffuser is disposed between the diodes and the platen.

Such scanners have certain limitations associated therewith. As the interrogating beam scans across the planar radiograph, the path length to the radiograph changes causing the size of the spot of radiation to vary. Since the mirror scans at constant angular velocity, the velocity of the spot along the planar radiograph varies. This causes a geometric distortion of the acquired image. Because the beam impinges on the radiograph at a varying angle, the shape of the spot of incident radiation is also distorted, thus degrading resolution. Further, due to the increased pathlength through the edges of the radiograph increases in the absorption of the beam are known to occur. These effects combine to produce a digitized image that is darker and of lower resolution at the lateral edges. This is perceived as disadvantageous.

In addition to the above, the prior system is slow, taking approximately one minute to scan a typical radiograph, owing primarily to the limited speed of oscillation of the galvanometer mirror.

Curved fields are known in the facsimile arts, as evidenced by United States Patent US-A-3,370,504. This patent discloses a facsimile apparatus which has a curved field and which has positioned therebehind a correspondingly curved array of optical fibers. The fibers conduct the transmitted radiation to a single photosensor, typically a photomultiplier tube. A recognized limitation of such an arrangement is a limited signal to noise ratio due to the noise introduced by the irregular effects resulting from the light passing from one optical fiber to the next.

Because of the above-mentioned limitations the use of such fiber optic arrays is presently not believed to be advantageous for high precision medical uses such as the scanning of radiographs.

Photomultiplier tubes also have known limitations, such as, their sensitivity to mechanical vibration, their tendency to degrade with age and their inability to tolerate excessive light levels. These factors presently militate against the use of this type of detector in precision medical uses.

### SUMMARY OF THE INVENTION

The present invention relates to a laser scanning apparatus comprising a curved field formed of spaced, coaxial plates for receiving a radiograph to be scanned by radiation produced from a laser source. One of the plates is formed of an optically diffuse material. Means, such as a rotatable multifaceted mirror and beam forming optics, is provided to produce a focussed beam of interrogating radiation on the radiograph. The source and beam forming means are mounted on a gantry that is displaceable with respect to the field to cause the beam to scan the field in raster fashion. A photodetector is positioned with respect to the field to receive radiation transmitted through the radiograph. The photodetector is itself comprised of a plurality of semiconductor elements connected electrically in parallel and physically arranged in edge-to-edge abutting relationship. The elements are arranged in a curvilinear pattern with each being substantially equally spaced from the radiograph. A slit may be mounted intermediate the field and the photodetector.

### BRIEF DESCRIPTION OF THE DRAWINGS

The invention may be more fully understood from the following detailed description thereof taken in connection with accompanying drawings which form a part of this application and in which:

Figure 1 is a highly stylized pictorial representation of a laser scanning apparatus in accordance with the present invention;

Figure 2 is a side elevation partially in section of the photodetector assembly used in the laser scanning apparatus shown in Figure 1;

Figure 2A is an enlargement of the circled portion of Figure 2; and

Figure 3 is an elevational view taken along view lines 3-3 in Figure 2.

### DETAILED DESCRIPTION OF THE INVENTION

Throughout the following detailed description similar reference numerals refer to similar elements in all figures of the drawings.

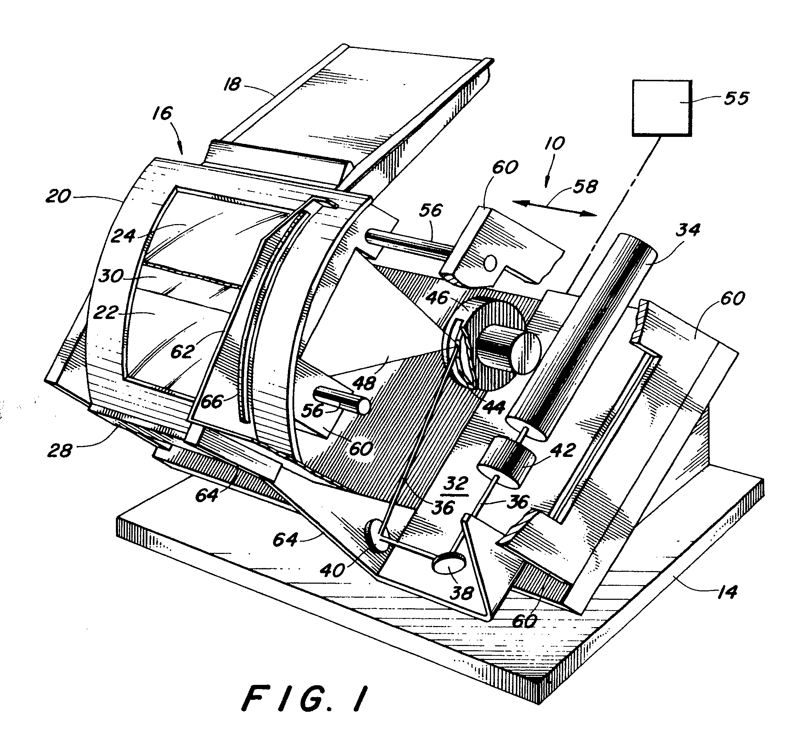

Figure 1 shows a highly stylized pictorial representation of a laser scanning apparatus or scanner 10 in accordance with the present invention. The scanner 10 includes a base 14 that supports a film guide generally indicated by reference character 16. The film guide 16 includes an inlet chute 18 that communicates with a curved film support arrangement 20. The film support arrangement includes a pair of curved plates 22 and 24 arranged in a coaxial orientation to each other. The inner plate 22 is formed of clear glass that has an antireflection coating on both sides. The outer plate 24 is formed of an optically diffuse material such as opal glass.

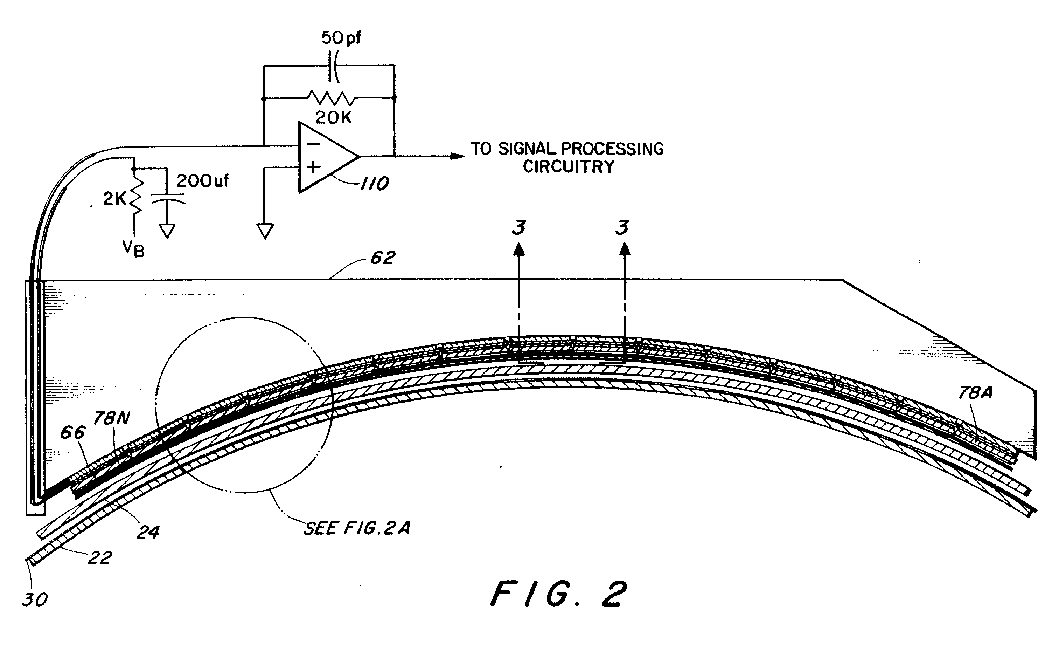

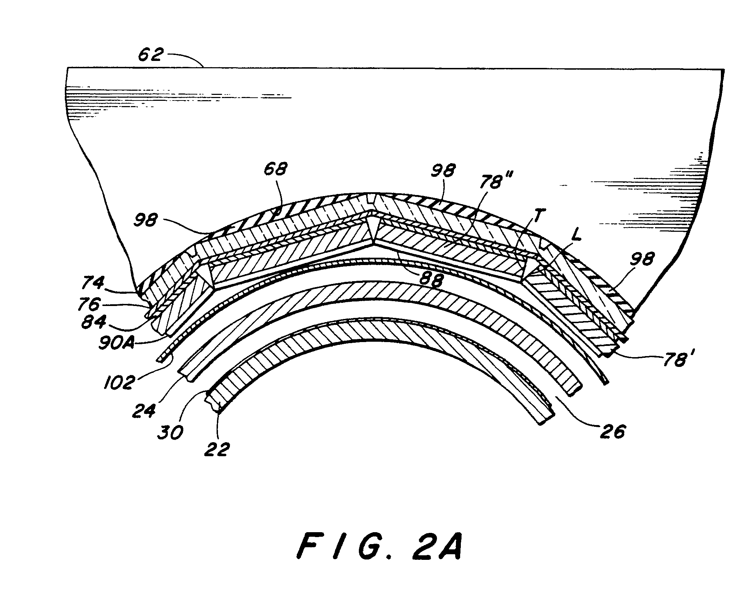

The plates 22 and 24 are spaced from each other by a predetermined clearance distance to form a curved film transport passage 26 (Figure 2A). The passage 26 is in communication with the chute 18. The end of the passage 26 opposite the chute 18 is intermittently closable by a film stop member 28. When asserted the stop 28 provides an abutment against which a radiographic film 30 to be scanned in a manner to be discussed is maintained in a predetermined position. The plates 22, 24 thus cooperate to define a curved field for receiving the radiograph to be scanned. The outlet of the passage may communicate with a suitable receptacle (not shown).

Mounted to a gantry 32 is a laser source 34 operative to project a beam 36 of radiation through beam forming optics 42 toward a pair of reflecting elements 38, 40. A suitable reference photodetector may be provided at an appropriate location for compensating any power variations in the laser source. Such a compensating reference device is omitted from the figure for clarity. A typical compensating reference device is shown in United States Patent US-A-3,741,664. The beam is deflected by the operation of the elements 38, 40 also mounted on the gantry 32. The beam passes to a rotatable multifaceted mirror 44. The mirror 44 is mounted for rotation movement in a housing 46 also supported on the gantry 32. As the incoming beam 36 impinges on a facet of the mirror presented thereto a beam 48 of interrogating radiation is directed toward the film 30 supported in the support arrangement 20 defined by the plates 22, 24.

The elements 34, 38, 40, 42 and 44 comprise means for producing a focussed beam 48 of interrogating radiation on the radiographic film 30. It should be readily appreciated that these means may be implemented by alternative scanning devices to cause the scanning beam 48 to remain at a focus as the beam 48 sweeps across the radiograph 30. Such alternatives may include acoustic-optic, holographic and/or other electro-optic devices to cause the beam to scan at a known angular rate.

The gantry 32 is displaceable by a synchronous motor drive (shown schematically at 55) on a pair of guide rails in the direction of the double-headed arrow 58. The motor 55 and guide rails may be conveniently mounted anywhere on the scanner 10, as beneath the gantry 32 on the base 14. The film guide 16 is supported on rods 56 which are themselves supported on pillars 60. The pillars 60 are fixed to the base 14. As a result the interrogating beam 48 moves relatively to the film 30 disposed between the plates 22, 24 such that the film 30 may be scanned in a raster fashion by the beam 48.

A photodetector assembly, or arm 62, is supported from the gantry 32 by a post 64. The arm 62 is cantilevered over the outer plate 24 and houses a photodetector 66 in accordance with the present invention. As is best seen in Figure 2 the arm 62 is provided with a substantially curved inner surface 68. The photodetector 66 is received and fixedly supported on the curved surface 68 of the arm 62 so as to lie radially proximal to the optically diffuse plate 24. As may be appreciated the plate 24 diffuses the radiation transmitted through the radiograph to the photodetector 66. The photodetector 66 is formed as a laminate structure. The lower layer of the photodetector 66 is a substrate 74, such as a circuit board or other rigid member. The substrate 74 is notched at predetermined intervals to permit it to closely approximate the curve of the inner surface 68 of the arm 62.

A first conductor path 76 is disposed on the substrate 74. Mounted above the first conductor path 76 is an array of photoresponsive semiconductor elements 78A through 78N. Adjacent ones of the elements 78 are abutted in next adjacency with the leading edge L (Figure 2A) of a given element (e.g., the element 78') in physical contact with the trailing edge T of the next adjacent element (e.g., the element 78").

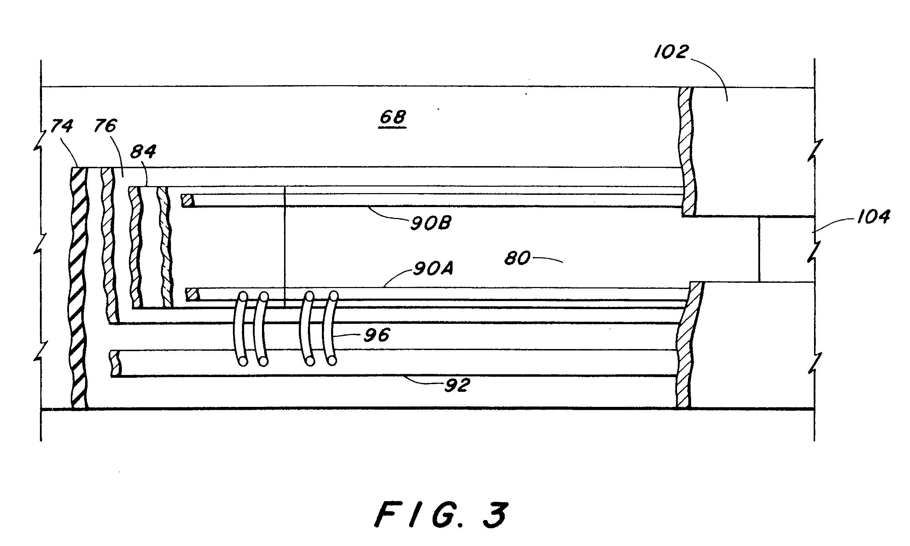

Each element 78 is formed of a body 80 of PIN semiconductor material. The lower surface of the body 90 is covered with a metallization 84 that is disposed in electrical contact with the conductor path 76. The opposite surface 88 of the semiconductor body has a pair of metallization paths 90A, 90B arranged along the confronting elongated edges thereof. As best seen in Figure 3 a second conductor path 92 is disposed on the substrate 74 in substantially parallel relation to the first conductor path 76. Attachment leads 96 electrically connect the metallization path 90A to the second conductor path 92.

The above-described photodetector 66 is attached to the curved surface 68 of the arm 62 by any suitable means of attachment, as by epoxy 98.

A mask 102 is disposed between the radial outer surface of the outer plate 24 and the inner surface of the semiconductor elements 78 of the photodetector 66. The mask 102 is mounted to the arm 62. The mask 102 is fabricated from an opaque material and has a slip aperture 104 therein. The mask 102 serves to compensate for slight changes of the solid radiation collection angle subtended by the detector elements 78. The mask 102 provides a linear aperture to define a predetermined, nonvarying angle for the photodetector to view the radiation which has passed through the radiograph.

The photodetector 66 may be fabricated in any convenient manner. For example, individual ones of the elements 78 are selected on the basis of compatibility as regards sensitivity, dark current and capacitance. Elements having substantially uniform sensitivity, uniformly low dark current and uniformly low capacitance are preferred.

An elongated, narrow printed circuit board having the first and second conductor paths 76 and 92, respectively, is fabricated and transversely notched to facilitate bending. The board is bent and mounted, as by the epoxy 98, to the inner surface 68 of the arm 62. The photodetector elements 78 are attached to the first conductor path 76 using an electrically conductive cement to achieve electrical contact with the metallization 84. The leads 96 are bonded to the second conductor path 92 and the metallization path 90A on each element 78. The elements are, as noted, attached in an edge-to-edge relationship.

The electrical conductor paths 76 and 92 are connected to a preamplifier circuit 110 (shown schematically in Figure 2). The circuit 110 is conveniently mounted in close physical proximity to the arm 62. The amplifier circuit 110 is configured from an operational amplifier such as that sold by Precision Monolithics, Inc. under Model Number OP-37. The values of the feedback resistor and capacitor are selected to provide optimum frequency response in keeping with the velocity of the interrogating beam 48. The output of the amplifier 110 and the output from the compensating reference photodetector, previously discussed, are combined to form a corrected signal that is applied to an analog to digital convertor for further processing consistent with established practice of the art.

A laser scanning apparatus in accordance with the present invention provides constant pathlength to the radiograph, constant velocity of the spot of interrogating radiation across the radiograph, constant incidence angle of the beam onto the radiograph and, as a consequence of the latter, constant pathlength through the radiograph. The combination of the rotating mirror, along with the short response time of the photodetector, provides a scanning apparatus with increased scanning speed. As a result a laser scanning apparatus is provided which overcomes all of the disadvantages of the prior art system as disclosed above.

Those skilled in the art, having benefit of the teachings of the present invention as hereinabove set forth, may effect numerous modifications thereto. These modifications are to be construed as being encompassed within the scope of the present invention as set forth in the appended claims.

## Claims

1. A laser scanning apparatus (10) comprising:
   a curved field (22, 24, 26) for receiving a radiograph (30) to be scanned;
   a source of interrogating radiation (34);
   means (38, 40, 42, 44) for producing a focussed scanning beam (48) of interrogating radiation onto the radiograph;
   a gantry (32) for mounting the source (34) and beam producing means (38, 40, 42, 44);
   means (55, 56, 60) for relatively displacing the gantry (32) with respect to the field so as to cause the beam to scan the field in raster fashion; and
   a photodetector positioned with respect to the field to receive radiation transmitted through the radiograph, the photodetector itself comprising a plurality of semiconductor elements (78A-78N) connected electrically in parallel and physically arrange in edge-to-edge abutting relationship, the elements being arranged in a curvilinear pattern with each being substantially equally spaced from the radiograph (30).

2. The laser scanning apparatus of Claim 1 wherein the curved field comprises a first (22) and a second (24) plate coaxially arranged with respect to each other.

3. The laser scanning apparatus of Claim 2 wherein the plate proximal to the photodetector is formed of an optically diffuse material.

4. The laser scanning apparatus of Claim 1 further comprising a slit mask (102) disposed intermediate the curved field and the photodetector.

5. The laser scanning apparatus of Claim 2 further comprising a slit mask (102) disposed intermediate the curved field and the photodetector.

6. The laser scanning apparatus of Claim 3 further comprising a slit mask (102) disposed intermediate the curved field and the photodetector.

7. The laser scanning apparatus of any one of claims 1, 2, 3 or 4, wherein the beam producing means comprises a rotatable multifaceted mirror (44) and beam forming optics (42).

**Revendications**

1. Un appareil de balayage à laser (10) comprenant:
   - un champ incurvé (22, 24, 26) destiné à recevoir une radiographie (30) à balayer;
   - une source de rayonnement (34) de scrutation;
   - des moyens (38, 40, 42, 44) destinés à produire un faisceau de balayage focalisé (48) de rayonnement de scrutation sur la radiographie;
   - un support à portique (32) de montage de la source (34) et les moyens d'émission de faisceau (38, 40, 42, 44);
   - des moyens (55, 56, 60) de déplacement relatif du support à portique (32) par rapport au champ, de façon à obliger le faisceau à balayer le champ à la manière d'une trame; et
   - un photodétecteur positionné par rapport au champ de manière à recevoir le rayonnement transmis à travers la radiographie, le photodétecteur comprenant lui-même une pluralité d'éléments semiconducteurs (78A-78N) connectés électriquement en parallèle et disposés physiquement en contact bord à bord, les éléments étant disposés selon un réseau curviligne et chacun présentant sensiblement le même écartement de la radiographie (30).

2. L'appareil de balayage à laser selon la revendication 1, dans lequel le champ incurvé comprend une première (22) et une deuxième (24) plaques disposées coaxialement l'une par rapport à l'autre.

3. L'appareil de balayage à laser selon la revendication 2, dans lequel la plaque la plus proche du photodétecteur est constituée d'un matériau optiquement diffus.

4. L'appareil de balayage à laser selon la revendication 1, comprenant un masque à fente (102) disposé entre le champ incurvé et le photodétecteur.

5. L'appareil de balayage à laser selon la revendication 2, comportant un masque à fente (102) disposé entre le champ incurvé et le photodétecteur.

6. L'appareil de balayage à laser selon la revendication 3, comportant un masque à fente (102) disposé entre le champ incurvé et le photodétecteur.

7. L'appareil de balayage à laser selon l'une quelconque des revendications 1, 2, 3 ou 4, dans lequel les moyens d'émission du faisceau comportent un miroir rotatif (44) à plusieurs faces et un système optique de formation de faisceau (42).

**Patentansprüche**

1. Laserabtastvorrichtung (10) mit:

   - einem gebogenen Feld (22, 24, 26) zur Aufnahme eines abzutastenden Radiogramms (30);
   - einer Abfragestrahlungsquelle;
   - einer Einrichtung (38, 40, 42, 44) zur Erzeugung eines auf das Radiogramm fokussierten Abtaststrahls (48) aus Abfragestrahlung;
   - einem Gestell (32) zum Anbringen der Quelle (34) und der Strahlerzeugungseinrichtung (38, 40, 42, 44);
   - einer Einrichtung (55, 56, 60) zum verschieben des Gestells (32) relativ zu dem Feld, um ein rasterartiges Abtasten des Feldes durch den Strahl zu bewirken; und
   - einem Photodetektor, der in bezug auf des Feldes derart angeordnet ist, daß er durch das Radiogramm transmittierte Strahlung empfängt, wobei der Photodetektor selbst mehrere Halbleiterelemente (78A-78N) aufweist, die parallel elektrisch verbunden und physisch Kante an Kante gegeneinanderliegend angeordnet sind, wobei die Elemente in einem kurvenförmigen Muster angeordnet sind, in dem jedes Element im wesentlichen den gleichen Abstand zum Radiogramm (30) aufweist.

2. Laserabtastvorrichtung nach Anspruch 1, bei der das gebogene Feld eine erste (22) und eine zweite Platte (24) aufweist, die zueinander koaxial angeordnet sind.

3. Laserabtastvorrichtung nach Anspruch 2, bei der die dem Photodetektor nähere Platte aus einem optisch diffusen Material besteht.

4. Laserabtastvorrichtung nach Anspruch 1, ferner mit einer zwischen dem gebogenen Feld und dem Photodetektor angeordneten Schlitzmaske (102).

5. Laserabtastvorrichtung nach Anspruch 2, ferner mit einer zwischen dem gebogenen Feld und dem Photodetektor angeordneten Schlitzmaske (102).

6. Laserabtastvorrichtung nach Anspruch 3, ferner mit einer zwischen dem gebogenen Feld und dem Photodetektor angeordneten Schlitzmaske (102).

7. Laserabtastvorrichtung nach einem der Ansprüche 1, 2, 3 oder 4, bei der die Strahlerzeugungseinrichtung einen drehbaren Mehrfacettenspiegel (44) und eine Strahlenformungsoptik (42) aufweist.

FIG. 1

EP 0 222 388 B1

50 pf

20K

TO SIGNAL PROCESSING
CIRCUITRY

110

200uf

2K

$V_B$

62

3    3

78A

78N

66

24

22

30

SEE FIG.2A

*F I G.  2*

F I G. 2A

FIG. 3

EP 0 222 388 B1